(19) Europäisches Patentamt
European Patent Office
Office européen des brevets

(11) Veröffentlichungsnummer: **0 074 564**
**B1**

(12) # EUROPÄISCHE PATENTSCHRIFT

(45) Veröffentlichungstag der Patentschrift: **22.04.87**

(51) Int. Cl.[4]: **C 08 F 299/04**, C 08 L 67/06

(21) Anmeldenummer: **82108031.4**

(22) Anmeldetag: **01.09.82**

(54) **Verwendung 3,4-disubstituierter Aniline als Beschleuniger für ungesättigte Polyesterharze.**

(30) Priorität: **12.09.81 DE 3136292**

(43) Veröffentlichungstag der Anmeldung:
**23.03.83 Patentblatt 83/12**

(45) Bekanntmachung des Hinweises auf die Patenterteilung:
**22.04.87 Patentblatt 87/17**

(84) Benannte Vertragsstaaten:
**AT CH DE FR GB IT LI NL SE**

(56) Entgegenhaltungen:
**GB - A - 1 540 228**
**US - A - 3 950 287**
**US - A - 4 012 542**

(73) Patentinhaber: **BAYER AG, Konzernverwaltung RP Patentabteilung, D-5090 Leverkusen 1 Bayerwerk (DE)**

(72) Erfinder: **Eimers, Erich, Dr., Kreuzbergstrasse 136, D-4150 Krefeld (DE)**
Erfinder: **Kraft, Klaus, Dr., Doerperhofstrasse 15, D-4150 Krefeld (DE)**
Erfinder: **Margotte, Dieter, Dr., Wedelstrasse 48, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft die Verwendung von Anilinen, die in m- und p-Position durch einen Alkylrest und ein Halogenatom substituiert sind, als Beschleuniger für Spachtelmassen auf Basis kalt (d.h. bei Raumtemperatur ohne Wärmezufuhr von aussen) härtbarer ungesättigter Polyesterharze.

Von Spachtelmassen verlangt man, dass sie schwierig zu vereinende Eigenschaften aufweisen:

1. eine «Topfzeit» (potlife), die genügend Zeit für die homogene Verteilung des Härtungskatalysators in der Harzmasse und für das Auftragen der Spachtelmasse lässt, verbunden mit einer hohen Lagerstabilität,
2. leichte Schleifbarkeit der Spachteloberfläche möglichst bald nach dem Auftragen der Spachtelmasse und
3. nach erfolgter Härtung hohe Flexibilität und Oberflächenhärte.

Zwar lässt sich durch hohe Beschleunigerkonzentrationen die Schleifbarkeit – allerdings auf Kosten der Topfzeit und der Lagerstabilität – verbessern; versucht man die Topfzeit und die Lagerstabilität durch Verringerung der Beschleunigerkonzentration und/oder Erhöhung des Inhibitorgehaltes zu verbessern, so ist eine gleichzeitige Verschlechterung der Schleifbarkeit die Folge.

Die aromatischen Amine zeigen als Beschleuniger ein höchst unterschiedliches Verhalten, ohne dass sich ein Zusammenhang zwischen ihrer Reaktivität und der Schleifbarkeit damit beschleunigter Spachtelmassen ergäbe. Insbesondere zeigt sich, dass hochreaktive Amine zwar zu rascher Aushärtung der Spachtelmasse, nicht aber notwendigerweise auch zu rascher Schleifbarkeit führen.

Es ist bekannt, Formmassen, insbesondere Spachtelmassen, auf der Grundlage kalt härtbarer Polyestergiessharze unter Verwendung von N,N-Dialkylarylaminen als Polymerisationsbeschleuniger auszuhärten (US-PS 2 480 928). Es ist auch bekannt, N,N-Bis-(β-hydroxyalkyl)-arylamine mit gesättigten oder ungesättigten Dicarbonsäuren zu einem Polyester umzusetzen oder mit Diisocyanaten zu einem Polyurethan umzusetzen und die resultierenden Produkte gegebenenfalls nach Abmischung mit aminfreien ungesättigten Polyesterharzmassen nach Lösen mit polymerisationsfähigen Monomeren unter Zusatz von Diacylperoxiden in der Kälte auszuhärten (DE-PS 919 431, DE-OS 1 943 945, DE-PS 1 643 927).

Aus der DE-OS 2 649 268 ist bekannt, dass Mischungen zweier bestimmter Beschleuniger Spachtelmassen auf Basis ungesättigter Polyesterharze eine besonders vorteilhafte Kombination von günstiger Topfzeit, hoher Lagerstabilität und rasch erreichbarer Schleifbarkeit verleihen. Allerdings neigen diese Spachtelmassen in ungehärtetem Zustand in Anwesenheit von Chinonen, wie z.B. Dibutylchinon oder Chloranil, zu blauer oder grüner Verfärbung. Auf die erwähnten Inhibitoren möchte man ungern verzichten, weil sie die Lagerstabilität der Polyesterharze und der daraus hergestellten Spachtelmassen stark erhöhen, ohne die Reaktivität allzu sehr zu beeinträchtigen.

Die US-PS 3 950 287 betrifft die Verwendung substituierter Aniline als Beschleuniger für die Härtung von Wasser-in-Öl-Emulsionen auf Basis polymerisierbarer Verbindungen, z.B. ungesättigter Polyesterharze. Der Kern der dort beschriebenen Erfindung ist die gleichzeitige Verwendung zweier verschiedener N,N-disubstituierter Aniline, von denen das eine – als «A» bezeichnet – am Stickstoffatom mindestens einen Hydroxyalkyl-Substituenten trägt, während das andere – als «B» bezeichnet – am Stickstoffatom Hydroxylgruppenfreie Alkylsubstituenten trägt. Beispiele für Halogen-substituierte Aniline werden nicht genannt, Halogen- und Alkyl- bzw. Cycloalkyl-substituierte Aniline erst recht nicht.

Gemäss Sp. 4, Z. 54–56 ist das kernunsubstituierte Dimethylanilin aufgrund seiner Wirksamkeit das bevorzugte Anilin «B». Die US-PS 3 950 287 führt also vom Gegenstand unserer Erfindung weg. Dies gilt insbesondere im Hinblick darauf, dass Spachtelmassen in der zitierten Patentschrift gar nicht erwähnt werden und diese Patentschrift demnach auch keine Lösung des eingangs unserer Anmeldung geschilderten Problems nahelegen konnte.

Die US-PS 4 012 542 beschreibt die Beschleunigung der Härtung ungesättigter Polyesterharze, wobei als Beschleuniger u.a. Aniline eingesetzt werden, die kernun-, -mono- oder -disubstituiert sein können (ohne dass diese Stellung der Substituenten am Ring näher definiert ist – von den namentlich genannten Verbindungen abgesehen). In Sp. 5, Z. 8/9 ebenso wie in Anspruch 8 wird p-Brom-N,N-dimethylanilin genannt. Ein Anilin, dessen Kern halogen- und alkylsubstituiert ist, wird auch in der US-PS 4 012 542 weder erwähnt noch nahegelegt.

Aufgabe der Erfindung war es, eine Methode zur Beschleunigung ungesättigter Polyesterharzmassen aufzuzeigen, welcher die vorerwähnten Mängel der bisher üblichen Aminbeschleuniger nicht anhaften.

Gegenstand der Erfindung ist die Verwendung von Verbindungen der Formel

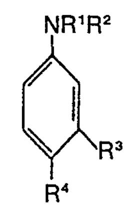

worin

$R^1$, $R^2$ einen gesättigten oder ungesättigten, gegebenenfalls OH-substituierten Kohlenwasserstoffrest mit 1 bis 18, vorzugsweise 1 bis 4, C-Atomen, insbesondere einen β-Hydroxy-$C_2$-$C_3$-alkylrest, und

der eine der beiden Reste $R^3$ und $R^4$ einen gegebenenfalls Phenyl-substituierten $C_1$–$C_4$-Alkyl- oder einen $C_5$–$C_6$-Cycloalkylrest und

der andere der beiden Reste $R^3$ und $R^4$ ein Halogenatom, vorzugsweise ein Fluor-, Chlor- oder Bromatom, bedeuten,

als Beschleuniger für Spachtelmassen auf Basis ungesättigter Polyesterharze.

Besonders bevorzugt verwendet werden Verbindungen, bei denen sowohl $R^1$ als auch $R^2$ einen β-Hydroxy-$C_2$-$C_3$-alkylrest bedeuten.

Bevorzugte Vertreter der erfindungsgemäss zu verwendenden Verbindungen sind z.B.

N,N-Diethyl-3-chlor-4-methylanilin,
N,N-Di-n-butyl-3-chlor-4-methylanilin,
N,N-Bis-(β-hydroxyethyl)-3-chlor-4-methylanilin,
N-Methyl-N-β-hydroxyethyl-3-chlor-4-methylanilin,
N,N-Bis-(β-hydroxypropyl)-3-chlor-4-methylanilin,
N-Methyl-N-β-hydroxypropyl-3-chlor-4-methylanilin,
N,N-Bis-(β-hydroxyethyl)-3-chlor-4-tert.-butyl-anilin,
N,N-Bis-(β-hydroxyethyl)-3-chlor-4-phenylisopropylanilin,
N,N-Bis-(β-hydroxypropyl)-3-fluor-4-tert.-butyl-anilin,
N,N-Bis-(β-hydroxyethyl)-3-fluor-4-ethylanilin,
N-β-Hydroxyethyl-N-β-hydroxypropyl-3-brom-4-methylanilin,
N,N-Bis-(β-hydroxypropyl)-3-chlor-4-methylanilin,
N,N-Bis-(β-hydroxypropyl)-3-brom-4-ethylanilin,
N,N-Bis-(β-hydroxyethyl)-3-fluor-4-methylanilin,
N,N-Bis-(β-hydroxyethyl)-3-chlor-4-cyclohexylanilin,
N,N-Bis-(β-hydroxypropyl)-3-fluor-4-isopropylanilin,
N-Methyl-N-β-hydroxypropyl-3-brom-4-methylanilin,
N,N-Dimethyl-3-chlor-4-methylanilin,
N-β-Hydroxyethyl-N-β-hydroxypropyl-3-chlor-4-methylanilin,
N,N-Diethyl-3-methyl-4-chloranilin,
N,N-Di-n-butyl-3-methyl-4-chloranilin,
N,N-Bis-(β-hydroxyethyl)-3-methyl-4-chloranilin,
N-Methyl-N-β-hydroxyethyl-3-methyl-4-chloranilin,
N,N-Bis-(β-hydroxypropyl)-3-methyl-4-chloranilin,
N-Methyl-N-β-hydroxypropyl-3-methyl-4-chloranilin,
N,N-Bis-(β-hydroxyethyl)-3-tert.-butyl-4-chloranilin,
N,N-Bis-(β-hydroxyethyl)-3-phenylisopropyl-4-chloranilin,
N,N-Bis-(β-hydroxypropyl)-3-tert.-butyl-4-fluoranilin,
N,N-Bis-(β-hydroxyethyl)-3-ethyl-4-fluoranilin,
N-β-Hydroxyethyl-N-β-hydroxypropyl-3-methyl-4-bromanilin,
N,N-Bis-(β-hydroxypropyl)-3-methyl-4-chloranilin,
N,N-Bis-(β-hydroxypropyl)-3-ethyl-4-bromanilin,
N,N-Bis-(β-hydroxyethyl)-3-methyl-4-fluoranilin,
N,N-Bis-(β-hydroxyethyl)-3-cyclohexyl-4-chloranilin,
N,N-Bis-(β-hydroxypropyl)-3-isopropyl-4-fluoranilin,
N-Methyl-N-β-hydroxypropyl-3-methyl-4-bromanilin,
N,N-Dimethyl-3-methyl-4-chloranilin und
N-β-Hydroxyethyl-N-β-hydroxypropyl-3-methyl-4-chloranilin.

Der bevorzugteste Vertreter der erfindungsgemäss zu verwendenden Verbindungen ist N,N-Bis-(β-hydroxyethyl)-3-chlor-4-methylanilin.

Die erfindungsgemäss zu verwendenden Verbindungen können in Mengen von 1,0 bis 10, vorzugsweise 1 bis 5, insbesondere 1,0 bis 3, Gew.-%, bezogen auf ungesättigtes Polyesterharz, eingesetzt werden.

Die erfindungsgemäss zu verwendenden Verbindungen können einzeln eingesetzt werden; es können aber auch Mischungen dieser Verbindungen verwendet werden. Es ist auch möglich, diese Verbindungen mit bis zu 50 Mol-%, bezogen auf 1 Mol Gesamtaminmischung, an N,N-Dialkyl- oder N,N-Bis-(hydroxyalkyl)-p-alkylarylaminen zu mischen und die erhaltenen Mischungen als Beschleuniger zu verwenden. Bevorzugte p-Alkylarylamine dieser Art sind z.B.:

N,N-Bis-(β-hydroxypropyl)-p-toluidin,
N-Methyl-N-β-hydroxyethyl-p-toluidin,
N,N-Bis-(β-hydroxypropyl)-3,4-dimethylanilin,
N,N-Bis-(β-hydroxyethyl)-3,4-dimethylanilin,
N,N-Bis-(β-hydroxyethyl)-4-tert.-butylanilin und
N,N-Bis-(β-hydroxypropyl)-4-cyclohexylanilin.

Nach einer besonderes bevorzugten Ausführungsform werden die erfindungsgemäss zu verwendenden Verbindungen gemeinsam mit den Umsetzungsprodukten aus N,N-Bis-(β-hydroxyethyl)-arylaminen und Dicarbonsäuren bzw. Diisocyanaten gemäss DE-OS 2 649 268 als Beschleuniger eingesetzt.

Die erfindungsgemäss zu verwendenden Verbindungen können dem ungesättigten Polyester während des Lösens in copolymerisierbaren Monomeren oder danach zugesetzt werden.

«Ungesättigte Polyesterharze» im Sinne der Erfindung sind Mischungen von 30 bis 75 Gewichtsteilen α,β-ethylenisch ungesättigter Polyester und 70 bis 25 Gewichtsteilen damit copolymerisierbarer ungesättigter Monomerer.

Derartige α,β-ethylenisch ungesättigte Polyester sind die üblichen Polykondensationsprodukte mindestens einer α,β-ethylenisch ungesättigten Dicarbonsäure mit in der Regel 4 oder 5 C-Atomen oder deren esterbildenden Derivate, gegebenenfalls in Abmischung mit bis zu 90 Mol-%, bezogen auf die ungesättigten Säurekomponenten, mindestens einer aliphatischen gesättigten Dicarbon-

säure mit 4–10 C-Atomen oder einer cycloaliphatischen Dicarbonsäure mit 8–10 C-Atomen oder einer aromatischen Dicarbonsäure mit 8–12 C-Atomen oder deren esterbildenden Derivate mit mindestens einer Polyhydroxyverbindung, insbesondere Dihydroxyverbindung, mit 2–8 C-Atomen – also Polyester, wie sie z.B. bei J.R. Lawrence, «Polyester Resins», Reinhold Publ. Corp., New York 1960, S. 18 f., und im Kunststoff-Handbuch, Bd. VIII («Polyester»), Carl Hanser Verlag, München 1973, S. 247–312, beschrieben sind.

Die Säurezahlen der Polyester sollen zwischen 1 und 100, vorzugsweise zwischen 20 und 70, die OH-Zahlen zwischen 10 und 150, vorzugsweise zwischen 20 und 100, und die als Zahlenmittel gemessenen Molekulargewichte $\bar{M}_n$ zwischen ca. 500 und 5000, vorzugsweise zwischen ca. 1000 und 3000 liegen (dampfdruckosmometrisch gemessen in Dioxan und Aceton; bei differierenden Werten wird der niedrigere als der korrekte angesehen).

Das bevorzugteste copolymerisierbare Monomere ist Styrol.

Es können einzelne Inhibitoren, aber auch Gemische verschiedener Inhibitoren verwendet werden. Bevorzugt sind dabei solche Mischungen, die neben Hydrochinon und seinen Derivaten noch Chinone, wie z.B. Chloranil oder Bromanil, Benzochinon, 2,5- oder 2,6-Dibutyl-benzochinon, in Konzentrationen von 0,01–0,1 Gew.-%, bezogen auf ungesättigtes Polyesterharz, enthalten.

Vor der Härtung werden den Polyesterharzen Polymerisationsinitiatoren, vorzugsweise Diacylperoxide oder Percarbonate, in Mengen von 1 bis 10 Gew.-%, bezogen auf ungesättigtes Polyesterharz zugesetzt. Bevorzugte Initiatoren sind z.B. Diacetylperoxid, Dibenzoylperoxid, Di-p-chlorbenzoylperoxid, Phthaloylperoxid, Succinylperoxid, Dilauroylperoxid, Acetylcyclohexansulfonylperoxid, Isopropylpercarbonat, Cyclohexylpercarbonat und Bis-(4-tert.-butylcyclohexyl)-percarbonat.

Zur Herstellung von Spachtelmassen werden den Polyesterharzen 50–350 Gew.-Teile, bezogen auf 100 Gew.-Teile Polyesterharz, Füllstoffe, wie Kreide, Talkum, Baryt, Asbestine, zugesetzt. Farbstoffe, Pigmente und/oder Thixotropiermittel, wie Aerosil oder hydriertes Ricinusöl, können natürlich ebenfalls zugesetzt werden. Das Mischen der verschiedenen Komponenten der erfindungsgemässen Formmassen erfolgt zweckmässig in Knetern, Dissolvern oder auf Walzenstühlen.

Die Spachtelmassen zeichnen sich durch gute Trockenschleifbarkeit und hohe Lagerstabilität aus. Sie zeigen auch bei längerer Lagerung keinerlei Verfärbung und erleiden keinen Reaktivitätsabfall.

Diese Spachtelmassen eignen sich z.B. zur Ausbesserung von Karosserieblechen, Kunststoffplatten und Steinplatten jeglicher Art. Bevorzugten Einsatz finden erfindungsgemäss beschleunigte Spachtelmassen auf dem Autoreparatursektor.

Die in den nachfolgenden Beispielen genannten Teile sind Gewichtsteile; Prozentangaben beziehen sich auf das Gewicht.

Beispiele

A. Herstellung der Polyesterharze

Polyesterharz I

Aus 89 Mol Diethylenglykol, 13 Mol Ethylenglykol und 98,1 Mol Maleinsäureanhydrid wird durch Schmelzkondensation ein Polyester hergestellt. Dabei werden gleichzeitig 42,1 Mol Dicyclopentadien addiert. Anschliessend wird das Harz zu einer 63%igen Lösung in Styrol gelöst und mit 0,04% Chloranil und 0,01% Kupfernaphtenat, jeweils bezogen auf das reine Polyesterharz, stabilisiert. Das erhaltene Polyesterharz hat eine Viskosität von 480 mPas (gemessen bei 25 °C) und eine Säurezahl von 10.

Polyesterharz II

Ein aus 47,1 Mol Maleinsäureanhydrid, 29,0 Mol Tetrahydrophthalsäureanhydrid und 80,6 Mol Propylenglykol durch Schmelzkondensation hergestellter Polyester wird in Styrol zu einer 65%igen Lösung gelöst und mit 0,04% Chloranil und 0,008% Kupfernaphtenat, jeweils bezogen auf das reine Polyesterharz, stabilisiert. Das erhaltene Polyesterharz hat eine Viskosität von 1050 mPas (gemessen bei 25 °C) und eine Säurezahl von 26.

B. Herstellung der Beschleuniger

1. Vergleich

Aminbeschleuniger I

Aus 1 Mol N,N-Bis-(β-hydroxypropyl)-p-toluidin und 0,774 Mol Adipinsäure wird durch Polykondensation ein Polyester hergestellt, der unter Zufügung von 0,1% Hydrochinon mit Styrol zu einer 70%igen Lösung gelöst wird.

Aminbeschleuniger II

N,N-Bis-(β-hydroxyethyl)-m-toluidin

Aminbeschleuniger III

N,N-Bis-(β-hydroxyethyl)-3,4-dimethylanilin

2. Erfindungsgemäss

Aminbeschleuniger IV

N,N-Bis-(β-hydroxyethyl)-3-chlor-4-methylanilin

Aminbeschleuniger V

N,N-Bis-(β-hydroxyethyl)-3-fluor-4-methylanilin

Aminbeschleuniger VI

Mischung aus 65 Teilen Beschleuniger IV und 35 Teilen Beschleuniger I.

Aminbeschleuniger VII

N,N-Bis-(β-hydroxyethyl)-4-chlor-3-methylanilin.

C. Herstellung der Spachtelmassen

Jeweils 100 Teile von Polyesterharz I bzw. II werden mit dem jeweiligen Beschleuniger, 130

Teilen Talkum, 60 Teilen Schwerspat und 7 Teilen Titandioxid (Rutil) homogenisiert.

Die Beschleunigermenge wird so bemessen, dass der Stickstoffgehalt bei allen unter Verwendung von Harz I hergestellten Spachtelmassen 0,038% und bei den unter Verwendung von Harz II hergestellten Spachtelmassen 0,027%, bezogen auf das Gesamtgewicht der Spachtelmasse, beträgt.

Alle Spachtelmassen werden mit unterschiedlichen Mengen an Toluhydrochinon auf ein Potlife von 4–5 Minuten/20 °C eingestellt.

Man erhält ca. 300 Teile fertiger Spachtelmasse.

D. Herstellung der Beschichtungen

100 g Spachtelmasse werden mit ca. 2 g einer handelsüblichen 50%igen Benzoylperoxidpaste verrührt. Die Masse wird dann in ca. 1 mm Schichtdicke auf entfettete und geschliffene Stahlblechplatten aufgetragen und die Schleifbarkeit nach bestimmten Zeiten beurteilt.

Zusammensetzung der Spachtel (in Teilen)

| | Vergleich → | | | erfindungsgemäss → | | | | | |
|---|---|---|---|---|---|---|---|---|---|
| | 1 | 2 | 3 | 4 | 5 | 6 | 7 | 8 | 9 |
| Polyesterharz I | 100 | 100 | 100 | 100 | 100 | 100 | 100 | | |
| Polyesterharz II | | | | | | | | 100 | 100 |
| Beschleuniger I | 3,6 | | | | | 1,8 | | | 1,26 |
| Beschleuniger II | | 1,59 | | | | | | | |
| Beschleuniger III | | | 1,7 | | | | | | |
| Beschleuniger IV | | | | 1,92 | | 0,96 | | 1,35 | 0,69 |
| Beschleuniger V | | | | | 1,74 | | | | |
| Beschleuniger VI | | | | | | 2,76 | | | 1,95 |
| Beschleuniger VII | | | | | | | 1,92 | | |
| Summe Füllstoffe | 197 | 197 | 197 | 197 | 197 | 197 | 197 | 197 | 197 |

E. Anwendungstechnische Prüfungen

1. Verfärbung

Die Verfärbung wird in Abhängigkeit von der Zeit bestimmt. Zur Verkürzung der Lagerzeiten werden die Spachtelmassen in verzinnten Weissblechdosen bei 50 °C gelagert und nach verschiedenen Zeiten geprüft. Dabei werden folgende Bewertungen gewählt:

0 = keine Verfärbung,
1 = ganz schwache Verfärbung,
2 = deutlich sichtbare Verfärbung,
3 = kräftige Verfärbung.

2. Schleifbarkeit

Die Schleifbarkeit wird nach der Peroxid-Zugabe nach unterschiedlichen Zeiten bestimmt, indem die ausgehärtete Spachtelmasse mit Schleifpapier mittlerer Körnung (80er Papier) von Hand ein und derselben Person geschliffen wird. Dabei wird sowohl die Menge an abgetragenem Spachtel als auch der Grad der Zusetzens des Schleifpapiers beurteilt. Im einzelnen bedeuten:

1. sehr hoher Abrieb, sehr gut schleifbar,
2. hoher Abrieb, gut schleifbar,
3. mässiger Abrieb, mässig schleifbar,
4. kaum Abrieb, schlecht schleifbar,
5. nicht schleifbar (Spachtel rollt auf der Schleifpapieroberfläche).

3. Lagerstabilität

Die Polyesterspachtel werden in verzinnten Weissblechdosen bei 50 °C gelagert. Die angegebenen Zeiten geben den frühesten Zeitpunkt an, an dem eine beginnende Polymerisation beobachtet wird.

Die geprüften anwendungstechnischen Eigenschaften sind in der folgenden Tabelle zusammengestellt.

| Beispiele | Verfärbung nach Tagen 5 | 10 | 20 | Trockenschleifbarkeit nach 15 | 20 | 30 Min. | Lagerstabilität Monate |
|---|---|---|---|---|---|---|---|
| 1 | 0 | 0 | 0 | 3 | 3 | 2 | 5 |
| 2 | 2 | 3 | 3 | 2 | 2 | 1 | 3 |
| 3 | 0 | 0 | 1 | 5 | 4 | 4 | 3 |
| 4 | 0 | 0 | 0 | 2 | 2 | 1 | 4 |
| 5 | 0 | 0 | 1 | 3 | 2 | 1 | 4 |
| 6 | 0 | 0 | 0 | 2 | 1 | 1 | 5 |
| 7 | 0 | 0 | 0 | 2 | 2 | 1 | 4 |
| 8 | 0 | 0 | 0 | 1 | 2 | 2 | 3 |
| 9 | 0 | 0 | 1 | 1 | 1 | 2 | 4 |

**Patentansprüche**

1. Verwendung von Verbindungen der Formel

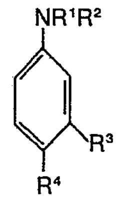

worin

$R^1$, $R^2$ einen gesättigten oder ungesättigten, gegebenenfalls OH-substituierten Kohlenwasserstoffrest mit 1 bis 18 C-Atomen und

der eine der beiden Reste $R^3$ und $R^4$ einen gegebenenfalls Phenyl-substituierten $C_1$–$C_4$-Alkyl- oder einen $C_5$–$C_6$-Cycloalkylrest und

der andere der beiden Reste $R^3$ und $R^4$ ein Halogenatom bedeuten,

als Beschleuniger für Spachtelmassen auf Basis ungesättigter Polyesterharze.

2. Verwendung nach Anspruch 1, dadurch gekennzeichnet, dass der Kohlenwasserstoffrest $R^1$ und/oder $R^2$ 1 bis 4 C-Atome enthält.

3. Verwendung nach Ansprüchen 1 und 2, dadurch gekennzeichnet, dass der Kohlenwasserstoffrest $R^1$ und/oder $R^2$ einen β-Hydroxy-$C_2$-$C_3$-alkylrest bedeutet.

4. Verwendung nach Ansprüchen 1–3, dadurch gekennzeichnet, dass einer der beiden Reste $R^3$ und $R^4$ ein Fluor-, Chlor- oder Bromatom bedeutet.

5. Verwendung nach Ansprüchen 1–4, dadurch gekennzeichnet, dass der Beschleuniger N,N-Bis-(β-hydroxyethyl)-3-chlor-4-methylanilin ist.

6. Verwendung nach Ansprüchen 1–5, dadurch gekennzeichnet, dass der Beschleuniger in Mengen von 1,0 bis 10 Gew.-%, bezogen auf ungesättigtes Polyesterharz, eingesetzt wird.

7. Verwendung nach Ansprüchen 1–6, dadurch gekennzeichnet, dass der Beschleuniger in Mengen von 1 bis 5 Gew.-%, bezogen auf ungesättigtes Polyesterharz, eingesetzt wird.

8. Verwendung nach Ansprüchen 1–7, dadurch gekennzeichnet, dass der Beschleuniger in Mengen von 1,0 bis 3 Gew.-%, bezogen auf ungesättigtes Polyesterharz, eingesetzt wird.

9. Verwendung nach Ansprüchen 1–8, dadurch gekennzeichnet, dass die Spachtelmassen 0,01 bis 1 Gew.-%, bezogen auf ungesättigtes Polyesterharz, Chloranil, Bromanil, Benzochinon, 2,5- oder 2,6-Dibutylbenzochinon enthalten.

10. Verwendung nach Ansprüchen 1–9, dadurch gekennzeichnet, dass die Spachtelmassen 50 bis 350 Gew.-%, bezogen auf ungesättigtes Polyesterharz, Füllstoffe enthalten.

**Claims**

1. Use of compounds of the formula

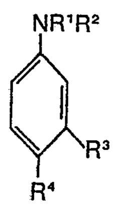

wherein

$R^1$ and $R^2$ denote a saturated or unsaturated, optionally OH-substituted hydrocarbon radical with 1 to 18 C atoms and

one of the two radicals $R^3$ and $R^4$ denotes an optionally phenyl-substituted $C_1$–$C_4$-alkyl radical or a $C_5$–$C_6$-cycloalkyl radical and

the other of the two radicals $R^3$ and $R^4$ denotes a halogen atom, as accelerators for filling compounds based on unsaturated polyester resins.

2. Use according to Claim 1, characterised in that the hydrocarbon radical $R^1$ and/or $R^2$ contains 1 to 4 C atoms.

3. Use according to Claims 1 and 2, characterised in that the hydrocarbon radical $R^1$ and/or $R^2$ denotes a β-hydroxy-$C_2$-$C_3$-alkyl radical.

4. Use according to Claims 1–3, characterised in that one of the two radicals $R^3$ and $R^4$ denotes a fluorine, chlorine or bromine atom.

5. Use according to Claims 1–4, characterised in that the accelerator is N,N-bis-(β-hydroxyethyl)-3-chloro-4-methylaniline.

6. Use according to Claims 1–5, characterised in that the accelerator is used in quantities of 1.0 to 10% by weight, based on the unsaturated polyester resin.

7. Use according to Claims 1–6, characterised in that the accelerator is used in quantities of 1 to 5% by weight, based on the unsaturated polyester resin.

8. Use according to Claims 1–7, characterised in that the accelerator is used in quantities of 1.0 to 3% by weight, based on the unsaturated polyester resin.

9. Use according to Claims 1–8, characterised in that the filling compounds contain 0.01 to 1% by weight, based on the unsaturated polyester resin, of chloranil, bromanil, benzoquinone, 2,5- or 2,6-dibutylbenzoquinone.

10. Use according to Claims 1–9, characterised in that the filling compounds contain 50 to 350% by weight, based on the unsaturated polyester resin, of fillers.

**Revendications**

1. Utilisation de composés de formule

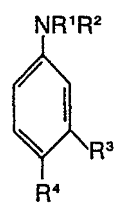

dans laquelle

$R^1$, $R^2$ représentent un reste d'hydrocarbure saturé ou non saturé, portant éventuellement un substituant OH, ayant 1 à 18 atomes de carbone et l'un des deux restes $R^3$ et $R^4$ est un reste alkyle en $C_1$ à $C_4$ ou cycloalkyle en $C_5$ ou $C_6$ portant éventuellement un substituant phényle et l'autre des deux restes $R^3$ et $R^4$ désigne un atome d'halogène, comme accélérateurs pour enduits de surface à base de résines polyesters non saturées.

2. Utilisation suivant la revendication 1, caractérisée en ce que les restes hydrocarbonés $R^1$ et/ou $R^2$ contiennent 1 à 4 atomes de carbone.

3. Utilisation suivant les revendications 1 et 2, caractérisée en ce que les restes hydrocarbonés $R^1$ et/ou $R^2$ représentent un reste β-hydroxyalkyle en $C_2$ ou $C_3$.

4. Utilisation suivant les revendications 1 à 3, caractérisée en ce que l'un des deux restes $R^3$ et $R^4$ est un atome de fluor, de chlore ou de brome.

5. Utilisation suivant les revendications 1 à 4, caractérisée en ce que l'accélérateur est la N,N-bis-(β-hydroxyéthyl)-3-chloro-4-méthylaniline.

6. Utilisation suivant les revendications 1 à 5, caractérisée en ce que l'accélérateur est utilisé en quantités de 1,0 à 10% en poids, sur la base de la résine polyester non saturée.

7. Utilisation suivant les revendications 1 à 6, caractérisée en ce que l'accélérateur est utilisé en quantités de 1 à 5% en poids sur la base de la résine polyester non saturée.

8. Utilisation suivant les revendications 1 à 7, caractérisée en ce que l'accélérateur est utilisé en quantités de 1,0 à 3% en poids sur la base de la résine polyester non saturée.

9. Utilisation suivant les revendications 1 à 8, caractérisée en ce que les enduits de surface contiennent 0,01 à 1% en poids, par rapport à la résine polyester non saturée, de chloranile, de bromanile, de benzoquinone, de 2,5- ou de 2,6-dibutylbenzoquinone.

10. Utilisation suivant les revendications 1 à 9, caractérisée en ce que les enduits de surface contiennent 50 à 350% en poids de charges, sur la base de la résine polyester non saturée.